# DEMANDE DE BREVET EUROPEEN

(11) **EP 4 239 504 A1**
(43) Date de publication de la demande: **06.09.2023**
(21) Numéro de dépôt: 23158151.3
(22) Date de dépôt: 23.02.2023
(51) Int. Cl.: G06F 21/31, G06F 21/62, H04L 9/40, H04W 12/63

(54) **PROCÉDÉ DE GESTION DU MODE DE DÉVERROUILLAGE D'UN OBJET**

(30) Priorité: 04.03.2022 FR 2201905
(71) Demandeur: Orange, 92130 Issy-les-Moulineaux (FR)
(72) Inventeur: MARCHAND, Hervé, 92326 Chatillon (FR); RIVOALEN, Mathieu, 92326 Chatillon (FR)

(57) **Abrégé**

L'invention concerne un procédé de gestion du mode déverrouillage d'un objet (OBJ), ledit objet comprenant une interface de communication pour communiquer avec un dispositif émetteur de signaux radioélectriques (GTW) lorsque l'objet est situé dans le champ de couverture radioélectrique formé par les signaux émis du dispositif, et lorsque l'objet est situé la zone de couverture associée au champs de couverture radioélectrique, le procédé comprend une étape de sélection d'un premier mode de déverrouillage associé la zone de couverture associée au champs de couverture radioélectrique,

## Description

### Domaine technique.

Le domaine de l'invention est celui des télécommunications.

L'invention concerne tout particulièrement un procédé de gestion du mode de déverrouillage d'un objet lors d'un accès audit objet.

L'objet visé ci-dessus inclut à la fois un objet physique équipé d'une unité de traitement de type processeur ou un objet logiciel. Un objet physique est par exemple un téléphone mobile , une tablette, un ordinateur portable, etc. Un objet logiciel vise par exemple des applications informatiques (application bancaire, application de jeu, etc.).

### Etat de la technique

Afin de protéger l'accès à un objet, l'utilisateur définit généralement un mode de déverrouillage (empreinte, code pin, schéma ou aucun) par défaut choisi parmi plusieurs modes de déverrouillage. Les différents modes de déverrouillage proposés sont associés à des niveaux de protection respectifs plus ou moins efficaces contre la fraude.

Le mode de déverrouillage choisi peut être modifié manuellement par un utilisateur via une interface graphique. Bien que modifiable, les inventeurs ont constaté que le mode de déverrouillage choisi était rarement modifié dans le temps ; de plus, ils ont constaté que, par défaut, le niveau de protection du mode de déverrouillage choisi est souvent le niveau le plus fort. Or un tel niveau n'est pas toujours judicieux dans toutes les circonstances.

L'invention vient améliorer la situation.

### Exposé de l'invention

A cet effet, selon un aspect fonctionnel, l'invention a pour objet un procédé de gestion du mode déverrouillage d'un objet, ledit objet comprenant une interface de communication pour communiquer avec un dispositif émetteur de signaux radioélectriques lorsque l'objet est situé dans le champ de couverture radioélectrique formé par les signaux émis du dispositif ; et lorsque l'objet est situé dans la zone de couverture associée au champs de couverture radioélectrique, le procédé comprend une étape de sélection d'un premier mode de déverrouillage associé la zone de couverture associée au champs de couverture radioélectrique..

L'invention automatise la sélection du mode de déverrouillage selon que l'objet est dans une zone de couverture d'un émetteur de signal ou pas. Grâce à l'invention, le niveau de protection du mode de déverrouillage varie dans le temps ; par exemple, en itinérance, hors du champ d'un émetteur de signaux donné, le mode de déverrouillage est par exemple très robuste c'est-à-dire associé à un niveau de protection élevé ; à l'inverse, proche d'un dispositif émetteur donné, le mode de protection sélectionné sera choisi parmi les moins sécurisés voire un mode sans déverrouillage, le déverrouillage de l'objet pouvant alors se faire sans authentification de l'utilisateur dans le lieu considéré.

Selon un premier mode de réalisation, une correspondance entre un identifiant de dispositif émetteur et un mode de déverrouillage est mémorisée ; et lorsque l'objet est dans la zone de couverture, le procédé comprend une étape de réception d'un identifiant d'émetteur, l'étape de sélection se basant sur la correspondance mémorisée. Ce premier mode automatise la sélection du mode de déverrouillage en fonction d'une donnée obtenue à partir d'un identifiant associé à un dispositif émetteur qui peut être une passerelle domestique ou tout autres dispositifs de confiance.

Selon une variante du premier mode, la correspondance est mémorisée dans l'objet. Cette variante privilégie un stockage de la correspondance dans l'objet ; en effet, une correspondance provenant d'un dispositif émetteur, même si ce dernier est de confiance, pourrait avoir été modifiée par un tiers malveillant ayant piraté le dispositif émetteur ou via une technique dite de « man in the middle ».

Selon un deuxième mode de réalisation, qui pourra être mis en oeuvre alternativement ou cumulativement avec le précédent mode, l'objet stocke une correspondance entre l'identifiant reçu et une localisation du dispositif émetteur. Dans cette configuration, l'étape d'obtention de l'identifiant est suivie
d'une étape de localisation du dispositif émetteur associé à l'identifiant ;
d'une étape de comparaison de la localisation issue de la correspondance avec la localisation issue de l'étape de localisation ;
l'étape de sélection étant exécutée en fonction du résultat de l'étape de comparaison.

Dans ce deuxième mode l'étape de sélection est exécutée sous condition ; la condition étant fonction du résultat de l'étape de comparaison. Dans un exemple qui sera illustré ci-dessous, si la localisation courante du dispositif émetteur correspond bien à la localisation issue de la correspondance enregistrée, dans ce cas l'étape de sélection est exécutée ; dans la négative, l'étape de sélection n'est pas exécutée et le mode de déverrouillage n'est pas modifié. Ce deuxième mode permet, lorsque l'objet reçoit l'identifiant d'être assuré que l'identifiant reçu provient d'un dispositif émetteur dont il connait la localisation et non d'un dispositif localisé à un autre endroit et donc potentiellement malveillant qui tenterait de modifier le mode de déverrouillage en réduisant le niveau de protection du mode de déverrouillage.

Selon un troisième mode de réalisation, qui pourra être mis en oeuvre alternativement ou cumulativement avec les précédents modes, et en ce que, lorsque le terminal sort de la zone associée au champ de couverture, le procédé comprend une étape de sélection d'un deuxième mode de déverrouillage à la place du premier mode de déverrouillage. Ce mode automatise aussi la sortie d'une zone de couverture.

Selon une variante du troisième mode, le deuxième mode de déverrouillage est un mode de déverrouillage par défaut. Ce mode automatise un retour à un mode d'authentification par défaut hors des zones de confiance. Le mode par défaut sera par exemple choisi parmi les modes offrant une bonne protection en termes de sécurité.

Selon une variante de ce troisième mode, le deuxième mode de déverrouillage est activé que si l'objet reste hors de portée de la zone de couverture pendant une durée donnée suite à la sortie.. De cette façon, si la sortie du dispositif du réseau domestique n'est que temporaire, ou si le signal radioélectrique, par exemple le signal WiFi, ne peut plus être reçu du fait d'un manque de couverture dans certaines zones telles qu'une cave, chambre, etc., le mode de déverrouillage courant est maintenu au lieu d'être modifié à chaque fois qu'une sortie de la zone de couverture se produit.

Selon un premier aspect matériel, l'invention se rapporte à une entité de gestion du mode déverrouillage d'un objet, ledit objet comprenant une interface de communication pour communiquer avec un dispositif émetteur de signaux radioélectriques lorsque l'objet est situé dans le champ de couverture radioélectrique formé par les signaux émis du dispositif, caractérisé en ce qu'il comprend un processeur configuré pour réaliser, lorsque l'objet est situé dans la zone de couverture associée au champs de couverture radioélectrique, une étape de sélection d'un premier mode de déverrouillage associé la zone de couverture associée au champs de couverture radioélectrique.

Selon un deuxième aspect matériel, l'invention se rapporte à un objet caractérisé en ce qu'il comprend une entité de gestion telle que définie ci-dessus.

Selon un quatrième aspect matériel, l'invention se rapporte à un programme d'ordinateur apte à être mis en oeuvre sur une entité telle que définie ci-dessus, le programme comprenant des instructions de code qui, lorsqu'il est exécuté par un processeur, réalise les étapes du procédé définies ci-dessus.

Enfin, selon un dixième aspect matériel, l'invention se rapporte à un support de données sur lequel a été mémorisée au moins une série d'instructions de code de programme pour l'exécution d'un procédé tel que défini ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur. D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé précité.

L'invention sera mieux comprise à la lecture de la description qui suit, donnée à titre d'exemple et faite en référence aux dessins annexés sur lesquels :
[Fig. 1] La figure 1 représente un système informatique sur lequel est illustré un exemple de réalisation de l'invention.
[Fig. 2] La figure 2 est un schéma synoptique simplifié de la structure matérielle de l'objet ;
[Fig. 3] La figure 3 illustre un premier mode de réalisation dans lequel l'objet entre dans une zone de couverture radioélectrique.
[Fig. 4] La figure 4 illustre un échange de messages entre le dispositif émetteur et l'objet dans la configuration décrite en référence à la figure 3.
[Fig. 5] La figure 5 illustre un deuxième mode de réalisation dans lequel l'objet quitte la zone de couverture radioélectrique.
[Fig. 6] La figure 6 illustre un échange de messages entre le dispositif émetteur et l'objet lorsque l'objet dans la configuration décrite en référence à la figure 5.
[Fig. 7] La figure 7 illustre une variante du mode décrit en référence à la figure 5.
[Fig. 8] La figure 8 illustre une variante du mode décrit en référence à la figure 3.

Description détaillée d'un exemple de réalisation illustrant l'invention :

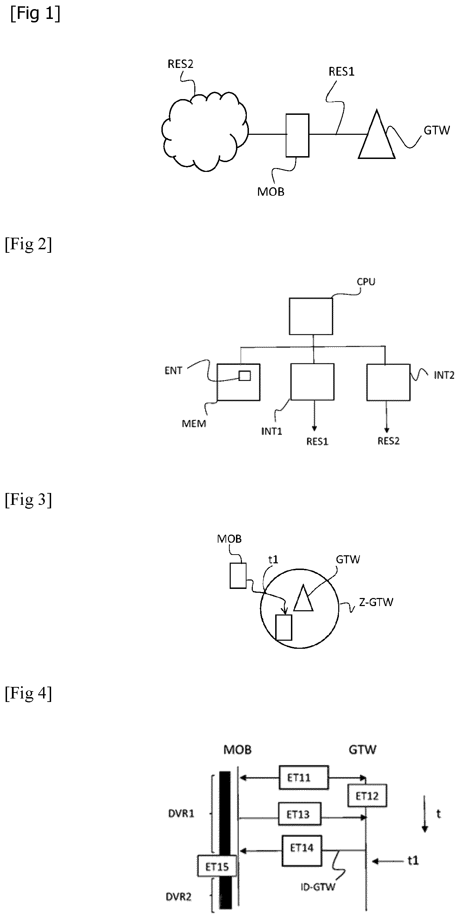

La figure 1 représente un système informatique SYS qui comprend un objet MOB qui nécessite un déverrouillage pour pouvoir être utilisé.

L'objet MOB est indifféremment un dispositif matériel ou un logiciel. Un dispositif matériel est un dispositif de traitement de données équipé d'un processeur. Un logiciel est par exemple une application informatique installée sur un dispositif de traitement de données.

Dans notre exemple, l'objet OBJ est matériel et sera illustré au moyen d'un téléphone mobile dans les exemples qui suivent.

Le système SYS comprend en outre un dispositif émetteur de signaux radioélectriques GTW. L'émission s'effectue sur une distance donnée et forme une zone de couverture réseau Z-GTW. Dans notre exemple, la passerelle domestique GTW qui offre une zone de couverture Wi-Fi référencée Z-GTW. Sur la figure 1, un cercle illustre la zone de couverture Z-GTW ; cependant on comprendra aisément qu'en réalité la zone peut prend une autre forme et que cette dernière peut fluctuer dans le temps du fait d'une multitude paramètres (obstacles, interférences, etc.)

Dans notre exemple, l'objet mobile MOB est équipé d'une interface INT1 de type Wi-Fi lui permettant de communiquer avec la passerelle domestique GTW.

A noter que l'invention ne se limite pas à un réseau Wi-Fi mis d'étend au contraire à tous types de moyens de communication aptes à diffuser des signaux radioélectriques sur une distance limitée. De tels moyens de communication sont par exemple la technologie Bluetooth, RFID, etc.

Dans notre exemple, l'objet MOB est également équipé d'une interface INT2 pour communiquer via réseau de communication mobile, par exemple un réseau de télécommunications 5G.

Dans notre exemple, la passerelle GTW est un dispositif de confiance pour l'objet MOB. Cette confiance peut avoir plusieurs origines ; dans notre exemple, la confiance provient du fait que l'objet et la passerelle ont déjà été appairés. De ce fait, lorsque l'objet MOB est dans la zone de couverture Z-GTW de cette passerelle, un appairage entre le terminal et la passerelle de référence s'effectue automatiquement.

La confiance peut avoir d'autres origines. Par exemple, dans le cas d'un réseau de courte portée (de quelques centimètres à quelques mètres), tel que le réseau RFID (sigle anglosaxon de « Radio Frequency IDentification), ou NFC (sigle anglosaxon de « Near Field Communication »), la proximité entre l'objet et le dispositif émettant en RFID ou NFC est un gage de confiance.

Dans notre exemple, la passerelle GTW est associée à un identifiant Id-GTW.

L'exemple décrit dans le présent texte se base sur un seul dispositif émetteur ; cependant, l'invention s'applique à un nombre illimité de dispositifs émetteurs. Dans cette dernière configuration, les dispositifs émetteurs seraient associés à des identifiants respectifs.

En référence à la figure 2, l'objet MOB comprend des ressources physiques et logicielles dont un microprocesseur CPU. L'objet MOB comprend des interfaes de communication à savoir la première interface de communication INT1 et la deuxième interface de communication INT2, des moyens de mémorisation MEM aptes à stocker des données dont un programme, appelé dans notre exemple entité de gestion ENT, apte à réaliser le procédé de l'invention décrit ci-dessous.

Les éléments décrits ci-dessus ainsi que le premier microprocesseur CPU sont reliés entre eux par l'intermédiaire d'un bus. Rappelons qu'un bus a pour fonction d'assurer le transfert de données numériques entre les différents circuits. Dans notre exemple, le bus en question inclut un bus de données et un bus de contrôle.

L'objet comprend en outre plusieurs modes de déverrouillage possibles. Les modes de déverrouillage les plus connues sont le déverrouillage par empreinte digitale, par code pin, par exécution d'un schéma, etc.

Un accès a l'objet peut aussi s'effectuer sans aucun mode de déverrouillage ; dans ce cas, l'accès à l'objet est simplifié car ne nécessite pas de phase de déverrouillage.

Selon l'invention, lorsque l'objet se situe dans la zone de couverture des signaux émis par l'émetteur, le procédé comprend une sélection d'un mode de déverrouillage donné associé à la zone de couverture associée au champs de couverture radioélectrique.

On verra aussi dans la suite, selon un mode de réalisation, que lorsque le terminal sort de la zone associée au champ de couverture, le procédé comprend en outre une étape de sélection d'un deuxième mode de déverrouillage à la place du premier mode de déverrouillage.

Dans notre exemple de réalisation, lorsque l'objet OBJ se situe dans le champ de couverture Z-GTW, l'objet MOB reçoit de la passerelle GTW un identifiant ID-GTW. Après réception de l'identifiant, l'objet OBJ sélectionne un mode de déverrouillage en fonction de l'identifiant reçu. On comprend ici que le mode de déverrouillage varie automatiquement contrairement à l'état de la technique.

Dans notre exemple, une correspondance entre identifiants de dispositifs émetteur et modes de déverrouillage respectifs sont stockés dans une base de données BDD, de préférence située dans la mémoire de l'objet MOB.

La correspondance entre identifiants de dispositifs émetteur et modes de déverrouillage respectifs pourrait aussi selon une variante être transmise par le dispositif émetteur. Cependant, le stockage de la correspondance dans l'objet est préféré en termes de protection ; en effet, un stockage de la correspondance dans un dispositif émetteur, bien que de confiance, peut toujours être l'objet d'un piratage au sein du dispositif émetteur ; la correspondance peut alors être modifiée de telle manière à réduire le niveau de protection » du mode de déverrouillage. Un tiers malveillant augmenterait ses chances de déverrouiller l'objet en conséquence.

Les figures 3 et 4 illustrent un premier mode de réalisation. Dans ce premier mode, l'objet OBJ est situé initialement hors de la zone de couverture Z-GTW. A ce stade, un premier mode de déverrouillage DVR1 est utilisé. Dans notre exemple, le premier mode de déverrouillage hors de la zone Z-GTW est un mode de déverrouillage défini par défaut ; ce mode est par exemple un mode associé à un niveau de protection élevé, par exemple par empreinte digitale.

La figure 4 est une vue schématique des échanges de messages entre l'objet MOB et la passerelle GTW en liaison avec le premier mode de réalisation décrit en référence à la figure 3.

On considère qu'à un instant donné, l'objet OBJ se déplace et entre ensuite dans la zone Z-GTW à l'instant t1.

A ce stade, lors d'une étape ET11, l'objet MOB requiert un établissement d'une connexion Wi-Fi.

Lors d'une deuxième étape ET12, la passerelle GTW reçoit et détecte ainsi l'entrée de l'objet OBJ dans la zone de couverture Z-GTW.

La détection pourrait s'effectuer d'une autre manière qu'en recevant une demande d'établissement de connexion, par exemple au moyen d'une caméra ou autres moyens de détection similaires capables de détecter l'entrée de l'objet dans la zone.

Suite à l'établissement, lors d'une étape ET13, l'objet OBJ transmet une requête DHCP. Rappelons que DHCP (sigle Anglosaxon de « Dynamic Host Configuration Protocol ») est un protocole qui permet à un ordinateur, dans notre cas l'objet, qui se connecte sur un réseau d'obtenir dynamiquement une configuration réseau.

La passerelle GTW identifie l'objet OBJ et réalise un appairage avec l'objet.

Précisons ici que le mode de réalisation peut être réalisé sans appairage en particulier lorsque le dispositif émetteur ne requiert pas d'appairage.

Suite à l'appairage, dans notre exemple, lors d'une étape ET14, la passerelle GTW transmet un identifiant de passerelle Id-GTW à destination de l'objet OBJ. Dans notre exemple, l'identifiant de passerelle Id-GTW est transmis dans une réponse DHCP.

Suite à la réception de l'identifiant Id-GTW, l'objet MOB récupère, lors d'une étape ET15, le mode de déverrouillage DVR2, dit deuxième mode de déverrouillage, grâce à la base de données de correspondances BDD qui stockent les correspondances entre identifiants et modes de déverrouillage.

Suite à l'obtention du deuxième mode de déverrouillage DVR2, en supposant que le mode courant, à savoir le premier mode DVR1, est un autre mode de déverrouillage que le mode issu de la correspondance, l'objet remplace le mode courant DVR1 par le mode de déverrouillage DVR2 issue de la correspondance.

Dans l'exemple qui précède, la base de données de correspondances BDD est stockée dans la mémoire de l'objet OBJ. Selon une variante, la base de données peut être stockées dans la mémoire de la passerelle ou dans une mémoire externe à la passerelle à laquelle la passerelle ou l'objet peut accéder.

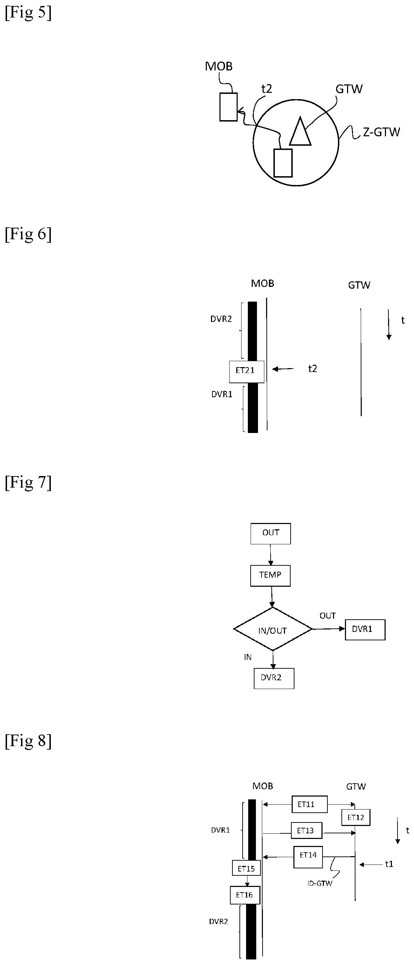

Les figures 5 et 6 illustrent un deuxième mode de réalisation qui peut être une suite possible du premier mode de réalisation. On suppose maintenant que l'objet quitte la zone de couverture Z-GTW à un instant t2.

La figure 6 est une vue schématique des étapes mises en oeuvre dans l'objet en liaison avec ce deuxième mode de réalisation décrit en référence à la figure 5.

L'objet OBJ détecte la sortie lorsqu'il n'est plus dans la zone de couverture Z-GTW.

Suite à la sortie, l'objet OBJ modifie automatiquement, lors d'une étape ET21, le mode de déverrouillage courant, à savoir le deuxième mode de déverrouillage DVR2, et le remplace par un mode de déverrouillage par défaut, dans notre exemple le premier mode de déverrouillage DVR1.

Les deux modes décrits ci-dessus peuvent faire l'objet de variantes.

Selon une variante du deuxième mode, en référence à la figure 7, suite à la sortie, le changement de mode de déverrouillage s'effectue que s'il est confirmé que l'objet est hors de la zone Z-GTW après une durée donnée TEMP suite à la sortie OUT de la zone Z-GTW.

Selon cette variante, suite à la sortie OUT à l'instant t2 introduit ci-dessus, une temporisation TEMP est mise en oeuvre à l'issue de laquelle est vérifiée si l'objet est toujours hors de portée de la zone de couverture Z-GTW à l'issue de la temporisation.

Dans l'affirmative, le mode de déverrouillage est modifié du deuxième mode DVR2 courant vers le premier mode DVR1. Dans la négative, le deuxième mode de déverrouillage courant DVR2 est maintenu.

En outre, avantageusement, avant de décider du maintien, une vérification supplémentaire peut consister à vérifier si l'objet a été hors de portée pendant toute la temporisation TEMP.

Cette variante évite d'exécuter les étapes décrites ci-dessus lorsque l'objet se situe à la limite de la zone et que l'objet se déconnecte quelques secondes à son insu en sortant de la zone de couverture et se reconnecte ensuite. Cette variante est utile lorsque l'objet ses situe à la limite de la zone de couverture.

Selon une deuxième variante en liaison avec le premier mode de rééalisation décrit ci-dessus, en référence à la figure 8, l'objet OBJ stocke en outre une correspondance entre l'identifiant reçu et une localisation du dispositif émetteur associé à l'identifiant.

Dans cette deuxième variante, les étapes E11 à ET15 sont les mêmes que celles décrites en référence à la figure 4.

La localisation du dispositif émetteur est la plupart du temps une position fixe ; néanmoins, cette variante couvre aussi le cas où la localisation du dispositif émetteur varie dans le temps ; dans ce cas, l'objet reçoit régulièrement une mise à jour de la localisation du dispositif émetteur de préférence depuis un dispositif de confiance. Dans cette configuration, suite à l'obtention de l'identifiant par l'objet OBJ, lors d'une étape ET16, l'objet OBJ, sous-entendue l'entité de gestion ENT, requiert une localisation du dispositif émetteur qui peut être une passerelle mobile mise en oeuvre dans un terminal mobile. Ce mode est connu sous le nom de « tethering » par l'homme du métier.

Plus précisément, en référence à la figure 8, suite à la réception de l'identifiant de la passerelle, en particulier dans notre exemple, suite à la cinquième étape ET15, l'objet réalise la suite d'étapes ET16 suivantes,
a. une étape de localisation du dispositif émetteur associé à l'identifiant ;
b. une étape de comparaison de la localisation issue de la correspondance avec la localisation issue de l'étape de localisation ;
l'étape de sélection étant exécutée en fonction du résultat de l'étape de comparaison.

Dans cette deuxième variante, l'étape de sélection est exécutée sous condition ; la condition étant fonction du résultat de l'étape de comparaison. Dans un exemple qui sera illustré ci-dessous, si la localisation courante du dispositif émetteur correspond bien à la localisation issue de la correspondance enregistrée, dans ce cas l'étape de sélection est exécutée ; dans la négative, l'étape de sélection n'est pas exécutée et le mode de déverrouillage n'est pas modifié. Ce deuxième mode permet, lorsque l'objet reçoit l'identifiant d'être assuré que l'identifiant reçu provient d'un dispositif émetteur dont il connait la localisation et non d'un dispositif localisé à un autre endroit et donc potentiellement malveillant qui tenterait de modifier le mode de déverrouillage en réduisant le niveau de protection du mode de déverrouillage.

Précisons ici que, dans le présent texte, les étapes réalisées par l'objet sous-entend que les étapes sont réalisées par l'entité de gestion ENT.

Précisons enfin ici aussi ici que le terme module ou le terme entité peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

## Revendications

1. Procédé de gestion du mode déverrouillage d'un objet (OBJ), ledit objet comprenant une interface de communication pour communiquer avec un dispositif émetteur de signaux radioélectriques (GTW) lorsque l'objet est situé dans le champ de couverture radioélectrique formé par les signaux émis du dispositif ; et lorsque l'objet est situé dans la zone de couverture associée au champs de couverture radioélectrique, le procédé comprend une étape de sélection d'un premier mode de déverrouillage associé à la zone de couverture associée au champs de couverture radioélectrique.

2. Procédé de gestion selon la revendication 1, **caractérisé en ce qu'**une correspondance entre un identifiant de dispositif émetteur et un mode de déverrouillage est mémorisée ; et **en ce qu'**il comprend, lorsque l'objet est dans la zone de couverture, une étape de réception d'un identifiant d'émetteur, l'étape de sélection se basant sur la correspondance mémorisée

3. Procédé de gestion selon la revendication 2, **caractérisé en ce que** l'objet (OBJ) stocke une correspondance entre l'identifiant reçu et une localisation du dispositif émetteur associé à l'identifiant et **en ce que** l'étape d'obtention de l'identifiant est suivie
a. d'une étape de localisation du dispositif émetteur associé à l'identifiant ;
b. d'une étape de comparaison de la localisation issue de la correspondance avec la localisation issue de l'étape de localisation ;
l'étape de sélection étant exécutée en fonction du résultat de l'étape de comparaison.

4. Procédé de gestion selon la revendication 1, **caractérisé en ce que** lorsque le terminal sort de la zone associée au champ de couverture, le procédé comprend une étape de sélection d'un deuxième mode de déverrouillage à la place du premier mode de déverrouillage.

5. Procédé de gestion selon la revendication 4, **caractérisé en ce que** le deuxième mode de déverrouillage est un mode de déverrouillage par défaut.

6. Procédé de gestion selon la revendication 4, **caractérisé en ce que** le deuxième mode de déverrouillage est activé que si l'objet reste hors de portée de la zone de couverture pendant une durée donnée suite à la sortie.

7. Entité de gestion (ENT) du mode déverrouillage d'un objet, ledit objet comprenant une interface de communication pour communiquer avec un dispositif émetteur de signaux radioélectriques lorsque l'objet est situé dans le champ de couverture radioélectrique formé par les signaux émis du dispositif, **caractérisé en ce qu'**il comprend un processeur configuré pour réaliser, lorsque l'objet est situé dans la zone de couverture associée au champs de couverture radioélectrique, une étape de sélection d'un premier mode de déverrouillage associé la zone de couverture associée au champs de couverture radioélectrique.

8. Objet (OBJ) **caractérisé en ce qu'**il comprend une entité telle que définie dans la revendication 7.

9. Programme d'ordinateur apte à être mis en oeuvre sur une entité de gestion (ENT) telle que définie dans la revendication 7, le programme comprenant des instructions de code qui, lorsqu'il est exécuté par un processeur, réalise les étapes du procédé définies dans la revendication 1.

10. Support de données sur lequel a été mémorisée au moins une série d'instructions de code de programme pour l'exécution d'un procédé de gestion tel que défini dans la revendication 1.
